(19) Europäisches Patentamt
European Patent Office
Office européen des brevets

(11) EP 2 073 198 A1

(12) EUROPEAN PATENT APPLICATION

(43) Date of publication:
24.06.2009 Bulletin 2009/26

(51) Int Cl.:
G11B 7/0065 (2006.01)        G11B 7/125 (2006.01)
G03H 1/00 (2006.01)          G11B 7/007 (2006.01)

(21) Application number: 08021809.2

(22) Date of filing: 16.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 17.12.2007 JP 2007324941

(71) Applicant: Kabushiki Kaisha Toshiba
Minato-ku,
Tokyo 105-8001 (JP)

(72) Inventors:
• Yamamoto, Yuichiro
  Tokyo 105-8001 (JP)
• Tatsuta, Shinichi
  Tokyo 105-8001 (JP)

(74) Representative: HOFFMANN EITLE
Patent- und Rechtsanwälte
Arabellastraße 4
81925 München (DE)

(54) **Optical information recording apparatus and method**

(57)    An optical information recording apparatus includes a light source (201) that emits an irradiation beam; a spatial light modulator (209) that converts the irradiation beam to an information beam, the information beam having a two-dimensional modulation pattern that carries information and is formed with a plurality of first regions in which each of boundaries is formed with OFF pixels; a phase modulator (212) that includes a plurality of second regions, and that imparts the phases to the irradiation beam or the information beam to modulate phases of the irradiation beam or the information beam; and a light collector (213) that collects the information beam and a reference beam on an optical information recording medium (214) that can record the information as hologram, by using interference fringes produced due to interference between the information beam and the reference beam.

FIG.1

**Description**

CROSS-REFERENCE TO RELATED APPLICATIONS

This application is based upon and claims the benefit of priority from the prior Japanese Patent Application No. 2007-324941, filed on Dec. 17, 2007; the entire contents of which are incorporated herein by reference.

BACKGROUND OF THE INVENTION

1. Field of the Invention

The present invention relates to an optical information recording apparatus and method for recording information as hologram in an optical information recording medium.

2. Description of the Related Art

Recently, among various approaches, a volume-recording type high-density optical recording using holography (hereinafter, "holographic memory") and a recording/reproducing device of the holographic memory (hereinafter, "holographic-memory recording/reproducing device") are being developed for practical use.

A recoding principle of a hologram recording system is that information is three-dimensionally recorded as fine interference fringes by causing an information beam and a reference beam to interfere with each other in a hologram recording layer of a holographic-memory recording medium. The hologram recording system allows multiple recording of a plurality of information in one location or in an overlapping location of the hologram recording layer in the holographic-memory recording medium, Therefore, this system can achieve extremely larger capacity than that by two-dimensional recording represented as a Blu-ray in such a manner that information is recorded in a plane with pits or marks.

A hologram recording/reproducing system is roughly classified into two systems, namely a two-light flux system and a coaxial system. The two-light flux system is implemented in such a manner that an information beam and a reference beam, obtained by subjecting a laser beam emitted from one light source to wavefront splitting, are made incident on a holographic-memory recording medium through separate optical paths. The coaxial system is implemented in such a manner that an information beam and a reference beam are made incident on a holographic-memory recording medium through one optical path. In both the systems, the basic recording principle is that an information beam which carries information by spatially modulating a laser beam by a spatial light modulator, such as a liquid crystal element and a digital micromirror device (DMD), is collected on the holographic-memory recording medium by an objective lens, and that the information beam is caused to interfere with a reference beam at or near a focal plane, to record the information therein.

A typical photosensitive material for the holographic-memory recording medium is photopolymer in which a refractive index changes according to an intensity distribution. As well-known, a Fourier-transformed image, or a spatial frequency distribution, as an electric field of an information beam is recorded in the focal plane by a Fourier transform action of the objective lens. In the hologram recording/reproducing system, the objective lens is called "Fourier transform lens" and the focal plane of the objective lens is called "Fourier plane".

The spatial light modulator has a plurality of pixels including ON pixels and OFF pixels. The information beam modulated by the ON pixels and the OFF pixels contains many spatial frequency components, and therefore, a Fourier-transformed image of the modulated information beam becomes a two-dimensional modulation pattern formed with many bright points. A 0th-order beam spot produced at the center of the Fourier-transformed image is a spot corresponding to a direct current (DC) component of the information beam. When hologram recording is performed, the spot has generally much higher intensity as compared to that in the other regions, and this causes negative effects of high-density recording. Namely, a high-brightness 0th-order beam spot exceeds a dynamic range of the holographic-memory recording medium, which causes linear recording to be disabled, and this leads to a decrease in a signal-to-noise (SN) ratio. High-brightness 0th-order beam spots overlap upon multiple recording, and the location of the 0th-order beam spot in the holographic-memory recording medium is thereby excessively exposed and consumed. This is because the holographic-memory recording medium is burnt-in and recording is thereby disabled in some cases.

As a first conventional technology, a method of reducing the high-brightness 0th-order beam spot is disclosed in a technical literature [Michael J. O'Callaghan, John R. McNeil, Chris Walker, and Mark Handschy, "Spatial light modulators with integrated phase masks for holographic data storage", Tech. Digest of ODS 2006, (IEEE 2006), pp. 23 to 25.]. The technical literature specifically discloses a method of planarizing an intensity distribution in a Fourier plane using a phase mask. The method of planarizing an intensity distribution in a Fourier plane is implemented by using the phase mask that has a pixel-match with the spatial light modulator and superimposing random phases on pixels of the information beam. The pixel-match mentioned here represents matching of a pixel width and a pixel boundary between the spatial light modulator and the phase mask.

When the phase mask is not used, the electric fields from the pixels constructively interfere with each other in the Fourier plane and the high-brightness 0th-order beam spot is thereby formed. However, when the phase mask is used, the intensity of the 0th-order beam is reduced because the electric fields from the pixels are superimposed on one another as random phases.

As a second conventional technology, a method of reducing the high-brightness 0th-order beam spot is disclosed in, for example, JP-A 2004-198816 (KOKAI) and JP-A 2007-172682 (KOKAI). This method is known as a method of placing a light-shielding filter at a position immediately upstream of a position where the information beam is irradiated to the holographic-memory recording medium, and removing a Fourier-transformed image or removing part of a Fresnel-transformed image at a defocus position by the light-shielding filter. Specifically, in the second conventional technology, the amount of light is reduced by placing the light-shielding filter at the center of the optical axis and removing part of or whole of the high-brightness 0th-order beam spot.

As a third conventional technology, a method of reducing the high-brightness 0th-order beam spot is disclosed in JP-A 2005-352097 (KOKAI). This method is known as a method of reducing the maximum intensity in an intensity distribution produced due to interference by reducing a portion of a reference beam that interferes with the 0th-order beam of the information beam in the Fourier plane of a holographic-memory recording medium.

However, a pixel pitch of the spatial light modulator is generally about 10 micrometers, and an alignment accuracy of about 1 micrometer is required to cause the phase mask to be pixel-matched to the spatial light modulator. Therefore, in the first conventional technology, highly accurate alignment needs to be achieved, which is practically unrealistic.

In the second conventional technology, the light use efficiency and the amount of reproduction beam decrease, which is negatively affected on multiple recording. In addition to this, the Fourier plane is a frequency space of the information beam, and thus, the removal of part of the frequency space indicates the removal of the DC component of the information beam, which causes degradation of a reproduced image. The third conventional technology does not mention a method of recovering the 0th-order beam, which has been reduced and is used for recording, upon reproduction, and thus, the degradation of a reproduced image may occur in this technology.

SUMMARY OF THE INVENTION

According to one aspect of the present invention, an optical information recording apparatus includes a light source that emits an irradiation beam; a spatial light modulator that converts the irradiation beam to an information beam, the information beam having a two-dimensional modulation pattern that carries information and is formed with a plurality of first regions in which each of boundaries is formed with OFF pixels; a phase modulator that includes a plurality of second regions, and that imparts the phases to the irradiation beam or the information beam to modulate phases of the irradiation beam or the information beam; and a light collector that collects the information beam and a reference beam on an optical information recording medium that can record the information as hologram, by using interference fringes produced due to interference between the information beam and the reference beam, wherein the boundaries in the first regions of the two-dimensional modulation pattern coincide with boundaries in the second regions.

According to another aspect of the present invention, an optical information recording method includes converting an irradiation beam emitted from a light source, by a spatial light modulator, to an information beam, the information beam having a two-dimensional modulation pattern that carries information and is formed with a plurality of first regions in which each of boundaries is formed with OFF pixels; modulating phases of the irradiation beam or the information beam by imparting phases to the irradiation beam or to the information beam by a phase modulator that including a plurality of second regions; and collecting the information beam and a reference beam on an optical information recording medium that can record the information as hologram, by using interference fringes produced due to interference between the information beam and the reference beam, wherein the boundaries in the first regions of the two-dimensional modulation pattern coincide with boundaries in the second regions.

BRIEF DESCRIPTION OF THE DRAWINGS

Fig. 1 is a schematic diagram illustrating an optical system of a holographic-memory recording/reproducing device according to a first embodiment of the present invention;
Fig. 2A is a schematic diagram illustrating a structure of phases imparted to an information beam by a phase mask;
Fig. 2B is a schematic diagram illustrating the phase mask;
Fig. 3 is a schematic diagram illustrating a two-dimensional modulation pattern image of the information beam emitted from a spatial light modulator;

Fig. 4 is a schematic diagram for explaining a tolerance of in-plane positional displacement;

Fig. 5 is a schematic diagram for explaining an intensity distribution in a Fourier plane;

Fig. 6A is a schematic diagram illustrating an example of ternary phases imparted to the information beam;

Fig. 6B is a schematic diagram for explaining an intensity distribution in a Fourier plane when a phase mask according to a modification of the first embodiment is used;

Fig. 7 is a schematic diagram illustrating an optical system of a holographic-memory recording/reproducing device according to a second embodiment of the present invention;

Fig. 8 is a schematic diagram illustrating an optical system of a holographic-memory recording/reproducing device according to a modification of the second embodiment;

Fig. 9 is a schematic diagram illustrating an optical system of a holographic-memory recording/reproducing device according to a third embodiment of the present invention;

Fig. 10 is a schematic diagram illustrating a structure of a phase mask according to the third embodiment;

Fig. 11A is a schematic diagram for explaining a phase pattern of the phase mask according to the third embodiment;

Fig. 11B is a schematic diagram for explaining an intensity distribution in the Fourier plane when the phase pattern of Fig. 11A is used;

Fig. 12A is a schematic diagram for explaining another example of the phase pattern of the phase mask according to the third embodiment;

Fig. 12B is a schematic diagram for explaining an intensity distribution in the Fourier plane when the phase pattern of Fig. 12A is used;

Fig. 13A is a schematic diagram for explaining another example of the phase pattern of the phase mask according to the third embodiment;

Fig. 13B is a schematic diagram for explaining an intensity distribution in the Fourier plane when the phase pattern of Fig. 13A is used;

Fig. 14A is a schematic diagram for explaining another example of the phase pattern of the phase mask according to the third embodiment;

Fig. 14B is a schematic diagram for explaining an intensity distribution in the Fourier plane when the phase pattern of Fig. 14A is used;

Fig. 15A is a schematic diagram for explaining another example of the phase pattern of the phase mask according to the third embodiment;

Fig. 15B is a schematic diagram for explaining an intensity distribution in the Fourier plane when the phase pattern of Fig. 15A is used;

Fig. 16A is a schematic diagram for explaining another example of the phase pattern of the phase mask according to the third embodiment;

Fig. 16B is a schematic diagram for explaining an intensity distribution in the Fourier plane when the phase pattern of Fig. 16A is used;

Fig. 17 is a schematic diagram illustrating an example of a beam spot in the Fourier plane when an angle step is set to 10 degrees in the case of the conventional technology in which the phase mask is not used;

Fig. 18 is a schematic diagram illustrating an example of beam spots in the Fourier plane when the angle step is set to 10 degrees using a phase mask according to a fourth embodiment of the present invention; and

Fig. 19 is a flowchart of a control process for angular multiplexing recording.

DETAILED DESCRIPTION OF THE INVENTION

Exemplary embodiments of the optical information recording apparatus and the optical information recording method according to the present invention are explained in detail below with reference to the accompanying drawings.

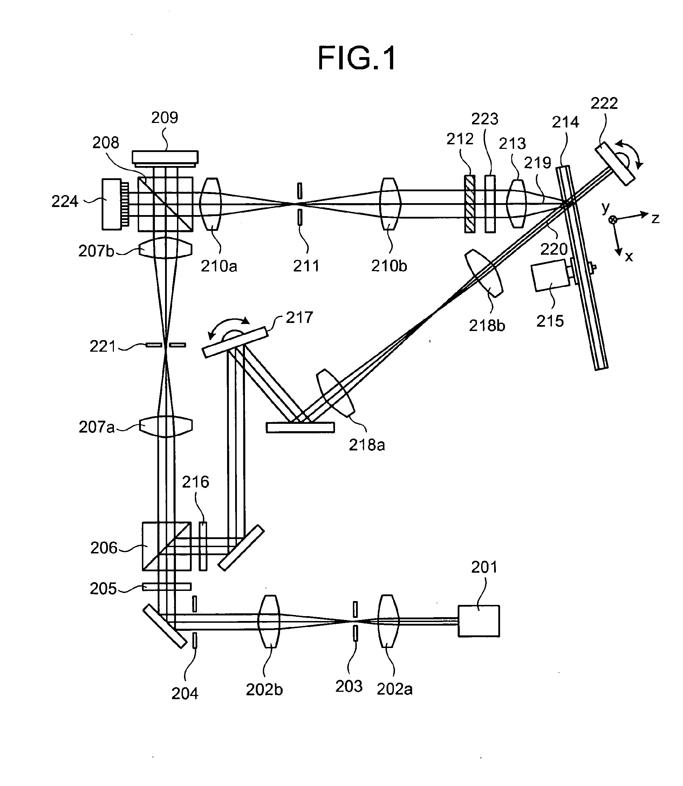

As shown in Fig. 1, first embodiment of the present invention employs an optical system of a two light flux system in which an information beam and a reference beam are made incident on a holographic-memory recording medium 214 through discrete objective lenses so as to overlap each other on the holographic-memory recording medium 214. However, the optical system is not limited to the two light flux system, and thus a colinear system may be employed as the optical system. The colinear system is such that the information beam and the reference beam are made incident on the holographic-memory recording medium 214 from the same direction through one objective lens or the like so as to share the same central axis thereof.

A semiconductor laser device 201 is a laser light source that emits a laser beam. To improve quality of recording and reproduction, the laser beam emitted from the semiconductor laser device 201 enters a spatial filter formed with a relay lenses 202a and 202b and a pinhole 203, and an unnecessary beam or noise is removed by the spatial filter. The laser beam, which is emitted from the spatial filter and from which the unnecessary beam or noise is removed, is reduced to a required beam diameter by an iris diaphragm 204, and then the laser beam with the reduced beam diameter is reflected by a mirror, a polarization direction of the laser beam is adjusted by a half wavelength plate 205, and the laser beam thereby enters a polarization beam splitter 206.

The wavefront of the laser beam having entered the polarization beam splitter 206 is split. Part of the laser beam having passed through the polarization beam splitter 206 becomes a P-polarized beam, which enters a polarization beam splitter 208 by relay lenses 207a and 207b. A shutter 221 is open upon recording. The laser beam passes trough the polarization beam splitter 208, the intensity thereof is modulated by a spatial light modulator 209, and the laser beam is converted to an information beam.

In the first embodiment, the spatial light modulator 209 converts the laser beam to an information beam being a two-dimensional modulation pattern which carries information and is formed from a plurality of first regions in which each of boundaries is formed with OFF pixels. A ferroelectric liquid crystal is used for the spatial light modulator 209 in the first embodiment. The ferroelectric liquid crystal has a high-speed responsivity of several tens of microseconds and is therefore suitable for a hologram recording/reproducing system.

The information beam emitted from the spatial light modulator 209 is the two-dimensional modulation pattern in which information to be recorded is digitally encoded to contain error correction. The two-dimensional modulation pattern is formed with a large number of bright points and dark points.

The information beam with the intensity modulated by the spatial light modulator 209 is reflected by the polarization beam splitter 208, to enter a phase mask 212 by relay lenses 210a and 210b and an iris diaphragm 211.

The spatial light modulator 209, the relay lenses 210a and 210b, and the phase mask 212 are arranged in a 4f optical system in which these components are arranged at intervals of a lens focal length. Therefore, an image of the two-dimensional modulation pattern of the information beam with the modulated intensity is formed on a position of the phase mask 212.

The phase mask 212 includes a plurality of regions (second regions), and modulates the phases of the information beam by using the plurality of regions. Details of the phase mask 212 will be explained later.

An information beam 219 with the phases modulated by the phase mask 212 is converged by a Fourier transform lens 213, and is irradiated to a holographic-memory recording medium 214 being a disk attached to a spindle motor 215 from the back side of the disk (spindle motor side). Here, there is shown a case for a transverse electric (TE) polarization mode in which a vibration direction of an electric field of the information beam is perpendicular to an incident plane of the disk. However, a transverse magnetic (TM) polarization mode in which the vibration direction of the electric field is within the incident plane, or elliptical polarization may be used.

Meanwhile, part of the laser beam incident on the polarization beam splitter 206 is reflected on the polarization beam splitter 206 and becomes an S-polarized beam which is used as a reference beam. The reference beam is converted to a polarized state, by a half wavelength plate 216, the same as that of the information beam 219 incident on the holographic-memory recording medium 214, and is then reflected by a mirror and a galvano mirror 217. The beam diameter of the reference beam is reduced by relay lenses 218a and 218b in a reduction system, and the reference beam with the reduced beam diameter is irradiated to the holographic-memory recording medium 214 and interferes with the information beam 219 in a hologram recording layer of the holographic-memory recording medium 214, so that information is recoded.

The holographic-memory recording medium 214 according to the first embodiment is a transmission recording medium, which includes two opposed substrates and the hologram recording layer held by the two substrates.

Each of the substrates is formed of a material having optical transparency such as glass, polycarbonate, and acrylic resin. However, the material of the substrate is not limited to these materials. For example, the material of the substrate does not need to have the transparency with respect to all wavelengths of a laser beam but only has to have the transparency with respect to a wavelength of a laser beam to be used.

The hologram recording layer is formed of a hologram recording material. The hologram recording material is a material on which a hologram is formed by interference between a laser information beam and a laser reference beam. Photopolymer is generally used as the hologram recording material. The photopolymer is a photosensitive material using photo polymerization of a polymerizable compound (monomer), and generally contains monomer as a main component, a photo-polymerization initiator, and a porous matrix that functions as a role of retaining volume before and after recording. The thickness of the recording material is preferably set to about 100 micrometers or more to acquire diffraction efficiency sufficient for signal reproduction and also acquire angle resolution appropriate for angle multiplexing.

Any other material such as dichromated gelatin and a photorefractive crystal can also be used as the hologram recording material.

Hologram recording to the hologram recording layer of the holographic-memory recording medium 214 is performed in the following manner. At first, the information beam 219 and the reference beam 220 overlap each other in the hologram recording layer to form interference fringes. At this time, a photo-polymerization initiator in photopolymer absorbs photons to be activated, and activates and accelerates polymerization of monomer in a bright portion of the interference fringes. When the polymerization of the monomer progresses and the monomer in the bright portion of the interference fringes is consumed, the monomer is shifted and supplied from a dark portion of the interference fringes to the bright portion. As a result, a density difference between the bright portion and the dark portion of the interference fringes occurs. Consequently, a refractive index modulation is formed according to an intensity distribution of an interference fringe pattern and the hologram recording is performed.

As a hologram recording system according to the first embodiment, an angular multiplexing recording system in which rotation is around the y-axis (see Fig. 1) is employed. Specifically, the angular multiplexing recording is performed by causing the galvano mirror 217 to rotate and thereby changing an incident angle of a reference beam 220 to the holographic-memory recording medium 214, so that information is recoded. In addition to the angular multiplexing recording around the y-axis, shift multiplexing recording is performed by shifting each relative position between the information beam 219/the reference beam 220 and the holographic-memory recording medium 214 in the x-axis direction and the y-axis direction.

When information in the holographic-memory recording medium 214 is to be reproduced, the shutter 221 is closed to block the information beam 219, and only the reference beam 220 is made incident on the holographic-memory recording medium 214.

At this time, a galvano mirror 222 placed on the disk surface side of the holographic-memory recording medium 214 is made to rotate, to reflect the reference beam 220 by the galvano mirror 217 so that an outward path and a return path become coaxial with each other. The reference beam 220 reflected thereby is diffracted from the holographic-memory recording medium 214, to be emitted as a reproduction beam. The reproduction beam is converted to a parallel light by the Fourier transform lens 213, and a polarization direction of the parallel light is rotated 90 degrees by a switchable half wave plate 223, so that the reproduction beam becomes a P-polarized beam. Thereafter, the reproduction beam is phase-modulated by the phase mask 212, passes through the relay lenses 210a and 210b, and passes through the polarization beam splitter 208. The reproduction beam is received by an imaging device 224 formed with a two-dimensional image sensor such as a complementary metal oxide semiconductor (CMOS) or a charge-coupled device (CCD), and then a reproduced image is acquired.

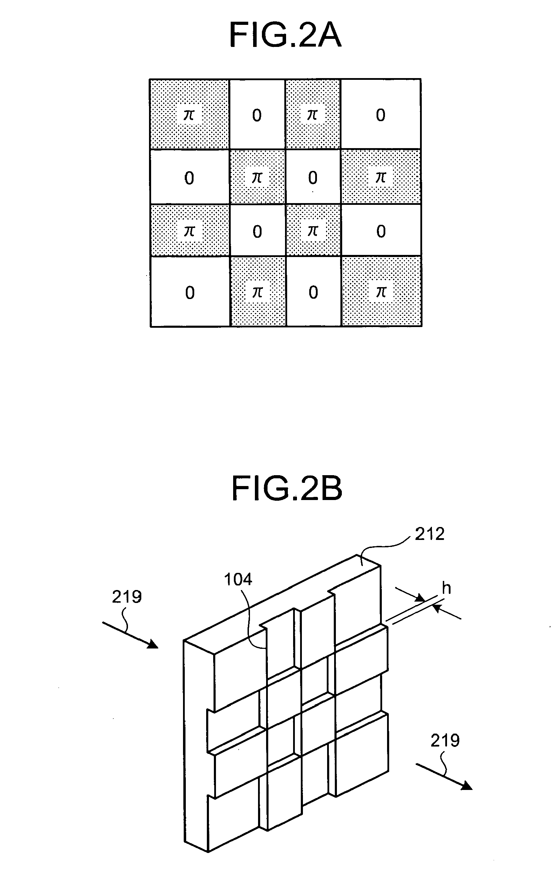

Next, the details of the phase mask 212 are explained below. Fig. 2A is a schematic diagram illustrating a structure of phases imparted to the information beam by the phase mask 212. Fig. 2B is a schematic diagram illustrating the phase mask 212.

The phase mask 212 is placed between the spatial light modulator 209 and the holographic-memory recording medium 214 at a position where the two-dimensional modulation pattern of the information beam emitted from the spatial light modulator 209 is imaged by the relay lenses 210a and 210b. The phase mask 212 is structured with regions (second regions) formed with a plurality of pixels. In the first embodiment, it is structured with 16 regions. Phases 0 and $\pi$ shown in Fig. 2A indicate phases imparted to the information beam that passes through the regions. As explained above, in the first embodiment, the phases are imparted to the information beam using two value patterns of 0 and $\pi$, to modulate the phases of the information beam. As shown in Fig. 2B, the phase mask 212 has a structure that has different thicknesses (widths) according to imparted phases such as 0 and $\pi$. By imparting the different phases to the information beam in this manner, the high-brightness 0th-order beam spot is dispersed into a plurality of spots, and the intensity thereof can thereby be reduced.

It is noted that the phase mask 212 is formed with the 16 regions in the first embodiment, however, the regions are not limited to this number, and thus, the phase mask 212 can be structured so as to have an arbitrary number of regions.

In the phase mask 212 according to the first embodiment, a step height h that provides a phase difference $\pi$ is expressed by following Equation (1) where n is a refractive index in a wavelength $\lambda$ of the laser beam of a material that forms the phase mask 212.

$$h = \frac{\lambda}{2(n-1)} \tag{1}$$

For example, if the refractive index of the material is n=1.5, then the step height is simply set to one wavelength.

Boundaries 104 in regions are created corresponding to boundaries in data region (explained later) of the image of the two-dimensional modulation pattern emitted from the spatial light modulator 209. Specifically, the step heights of the phase mask 212 are formed so that the boundaries 104 in the regions (the second regions) of the phase mask 212 coincide with the boundaries (OFF pixels) in the data region of the two-dimensional modulation pattern that is emitted from the spatial light modulator 209 and is imaged on the phase mask 212. The boundaries 104 in regions (the second regions) of the phase mask 212 are the boundaries in which the phases are changed.

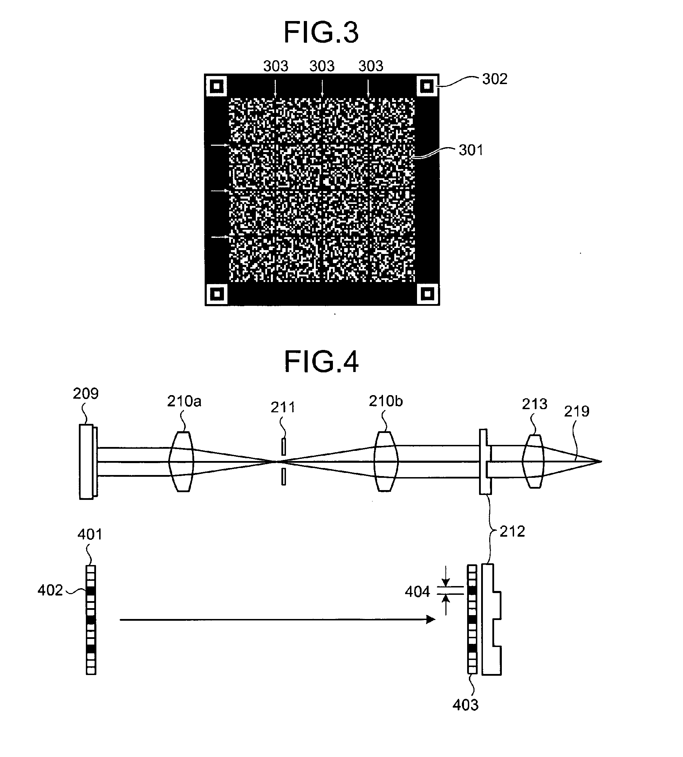

Fig. 3 is a schematic diagram illustrating a two-dimensional modulation pattern image of the information beam emitted from the spatial light modulator 209.

A central portion 301 formed with a large number of bright points and dark points in the two-dimensional modulation pattern image of the information beam 219 emitted from the spatial light modulator 209 is the data region in which information to be recoded is digitally encoded. It is noted that the four corners of the two-dimensional modulation pattern image are represented by a sync mark 302. Fig. 3 represents the data modulated in a modulation system in which 4×4=16 pixels in the data region is set as one unit and a predetermined number of pixels is set as bright points, and the data region has 24 units × 24 units.

Boundaries 303 in the data region are formed vertically and horizontally with three lines, respectively, each of which has one pixel width and is set to be an unused region (OFF pixels). By setting the boundaries 303, the tolerance of positional displacement in the phase mask 212 can be improved, as explained later.

One side of the data region has 4 pixels × 24 units + 3 pixels for boundaries = 99 pixels, and accordingly, the data region has about 10000 pixels. In the example of Fig. 3, a ratio of the boundaries 303 in the data region is (99×3-9) /99/99=about 6%, and this causes data efficiency to be slightly decreased. In Fig. 3, for convenience of explanation, the data region is represented by 99x99 pixels so as to make an input image more visible, however, several hundreds × several hundreds pixels = about 100000 pixels are generally used as the data region. In this case, a ratio of the boundaries (unused region) in the data region is about 1%, which hardly affects the degradation of the data efficiency.

Next, the tolerance of positional displacement in the phase mask 212 is explained below. In the following, the tolerance of in-plane positional displacement, the tolerance of positional displacement in the optical axis direction, and the tolerance of rotational displacement are explained individually below.

First, the tolerance of in-plane positional displacement is explained below, When one pixel width of the spatial light modulator 209 is set to 10 micrometers and an imaging magnification of the relay lenses 210a and 210b shown in Fig. 1 is set to one time, an image width, on the phase mask, of each boundary (OFF pixels) in the data region of the spatial light modulator 209 is 10 micrometers, as shown in Fig. 4.

Next, the tolerance of in-plane positional displacement in the phase mask 212 when using the phase mask 212 is explained below.

Pixels 401 (including OFF pixels 402) in the spatial light modulator 209 are imaged on the phase mask 212 by the relay lenses 210a and 210b. Boundaries in regions of the phase mask 212 are simply arranged within OFF pixels 404 in a formed image 403 of the pixels 401 in the spatial light modulator 209, and therefore, a tolerance of in-plane positional displacement of 10 micrometers can be ensured. Further, the magnification of the relay lenses 210a and 210b shown in Fig. 1 is generally 1 or more, and the tolerance is thereby further improved. Accordingly, it is understood that the tolerance of in-plane positional displacement in the phase mask 212 is satisfactorily within the acceptable range in practical use.

Next, the tolerance of positional displacement in the optical axis direction of the phase mask is explained below. This tolerance only has to be within depth of focus of the relay lens 210b shown in Fig. 1. The tolerance of positional displacement in the optical axis direction is expressed by following Equation (2) where d is depth of focus of the lens, $\lambda$ is a laser wavelength, and NA is the number of lens apertures. Here, the term depth of focus is defined as a range in which the central intensity of an image is 80% of that of a perfect aberration-free image.

$$d = \pm \frac{\lambda}{2NA^2} \qquad\qquad (2)$$

An appropriate value of the depth of focus in the holographic-memory recording/reproducing device is d=±81 micrometers when calculated based on the laser wavelength $\lambda$; 0.405 micrometer and the number of lens apertures NA: 0.05. It is understood from this that the tolerance of positional displacement in the optical axis direction of the phase mask 212 is satisfactorily within the acceptable range.

Next, the tolerance of rotational displacement of the phase mask 212 is explained below. The spatial light modulator 209 has 300x300 pixels, one pixel width is set to 10 micrometers, and an imaging magnification of the relay lenses 210a and 210b shown in Fig. 1 is set to one time. In this case, an image, on the phase mask 212, of the boundary in the data region of the spatial light modulator 209 becomes 3000 micrometers × 10 micrometers. The boundary in the phase mask 212 is simply placed in the region of the boundary, and thus, the tolerance of rotational displacement is tan$^{-1}$(10/3000)≅0.19 degree. Therefore, it is understood from this that the tolerance is satisfactorily within the acceptable range.

The pixel-matched phase mask, disclosed in the first conventional technology as the non-patent literature, needs to have the number of divisions equivalent to the number of pixels of the spatial light modulator. Namely, the phase mask needs to be provided with divided regions of several hundreds × several hundreds, which is difficult to be fabricated, and this also leads to an increase in fabrication costs.

On the other hand, the phase mask 212 according to the first embodiment has the number of divisions i.e., the number of regions which is extremely smaller than that of the conventional technology. Therefore, the phase mask 212 is easily fabricated and the fabrication costs can be reduced. Besides, as explained above, each of the tolerance of in-plane positional displacement, the tolerance of positional displacement in the optical axis direction, and the tolerance of rotational displacement is within the acceptable range.

If the conventional pixel-matched phase mask is placed at the same position as that of the phase mask 212 according to the first embodiment, the phase mask needs to be provided with a pixel width which is determined allowing for a magnification of the relay lenses 210a and 210b. However, the magnification of the relay lenses 210a and 210b varies caused by individual differences of a lens focal length. Consequently, the fabrication yield of the pixel-matched phase mask is worsened, and mass production becomes thereby difficult. These clues indicate that by providing the boundaries formed with the OFF pixels of the data region and a small number of regions in the two-dimensional modulation pattern of the spatial light modulator 209, the phase mask 212 can be mass-produced, and thus, the tolerances of the positional displacement, the displacement in the optical axis direction, and of the rotational displacement are also of great significance.

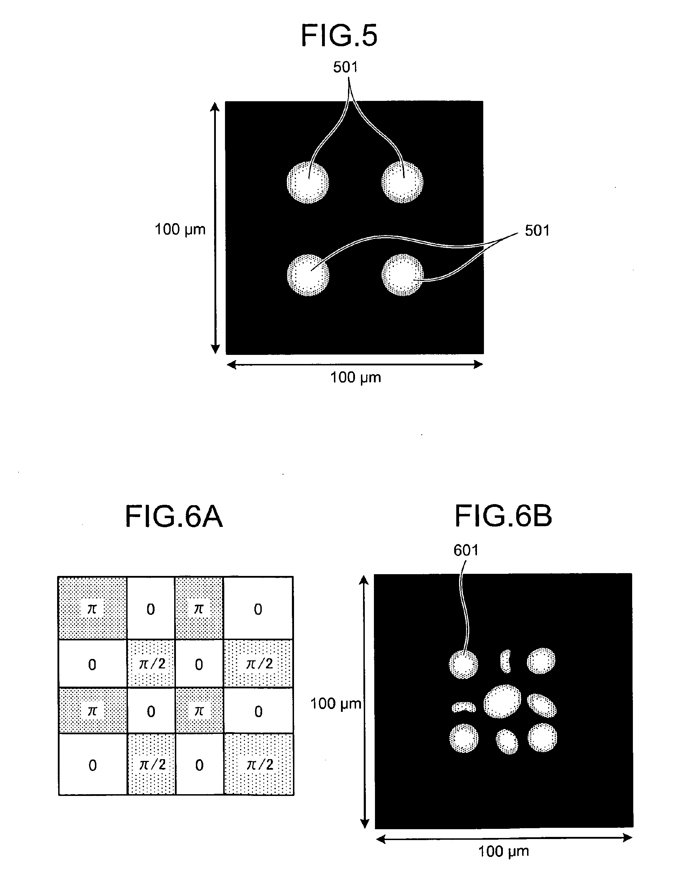

The intensity distribution in a Fourier plane shown in Fig. 5 represents an intensity distribution in a region of 100 micrometers $\times$ 100 micrometers near the center of the optical axis, namely, represents a result of analyzing the intensity based on a laser wavelength: 0.405 micrometer, a width of an input image on an aperture of Fourier transform lens: 3 millimeters, and a focal length of Fourier transform lens: 80 millimeters. As shown in Fig. 5, the high-brightness 0th-order beam spot produced when the phase mask 212 is not used is eliminated but is dispersed into four spots 501. Each intensity of the spots 501 is about 20% (analytic value) of the intensity of the 0th-order beam spot when the phase mask is not used, and this is effective as an intensity reduction measure for the 0th-order beam in the Fourier plane. Further, because the light-shielding filter used in the conventional technology is not used in the first embodiment, the decrease in the light use efficiency and in the amount of reproduction beam can be reduced.

The reference beam modulated by the spatial light modulator 209 is imparted phases in the outward path and the return path by the phase mask 212, and is detected by the imaging device 224. However, the reproduction beam is detected with the intensity that is proportional to the square of the electric field, and because of this, the degradation of a reproduction signal due to imparting of phases is hardly affected.

As explained above, in the first embodiment, by using the phase mask 212, the need for highly accurate alignment is eliminated, and the 0th-order beam in the Fourier plane can be reduced in the hologram recording/reproducing system while preventing the degradation of a reproduced image.

Specifically, in the first embodiment, the region boundaries of the phase mask 212 are provided on the regions formed with the OFF pixels in the data region of the two-dimensional modulation pattern emitted from the spatial light modulator 209. Consequently, a smaller number of regions is required, which allows improved tolerances of the positional displacement, the displacement in the optical axis direction, and of the rotational displacement, and there is no need for high-accuracy alignment.

Furthermore, in the first embodiment, the phase mask 212 imparts different phases to the information beam, and this allows the high-brightness 0th-order beam spot in the Fourier plane to be dispersed into a plurality of spots, so that the degradation of the reproduced image can be prevented by reducing the intensity of the high-brightness spot.

Moreover, because the light-shielding filter used in the conventional technology is not used in the first embodiment, the light use efficiency and the amount of reproduction beam are not decreased, so that the degradation of the reproduced image can be prevented.

Furthermore, in the first embodiment, because the phase mask 212 has the small number of regions, fabrication costs can be reduced.

The phases to be imparted to the information beam by the phase mask 212 are not limited to the two values, and therefore, the phases may be three values or more. Fig. 6A is a schematic diagram illustrating an example of ternary phases imparted to the information beam. In the example of Fig. 6A, the number of regions are set to 16 which is the same as that of the first embodiment, however, the phases to be imparted are three values of 0, $\pi/2$, and $\pi$. The structure of the phase mask is such that, similarly to the first embodiment, a step height is formed in the thickness direction of the phase mask corresponding to each phase. For example, when n is a refractive index in a laser wavelength $\lambda$ of a material of the phase mask 212, a step height h that provides a phase difference $\pi/2$ is represented by Equation (3), and a step height h that provides a phase difference $\pi$ is represented by Equation (4).

$$h = \frac{\lambda}{4(n-1)} \tag{3}$$

$$h = \frac{\lambda}{2(n-1)} \tag{4}$$

Fig. 6B is a schematic diagram for explaining an intensity distribution in the Fourier plane when a phase mask according to a modification of the first embodiment is used. When the phase mask is not used, the high-brightness 0th-order beam spot is dispersed into five spots 601 by the phase mask. It is noted that in Fig. 6B, the high-brightness 0th-order beam spot is dispersed into nine spots including low-intensity spots. The maximum intensity of the spots is about 15% (analytic value) of the high-brightness 0th-order beam spot in the case of not using the phase mask, and thus the 0th-order beam in the Fourier plane can be reduced.

In the first embodiment, the phase mask 212 is placed between the spatial light modulator 209 and the holographic-memory recording medium 214 at the position where the two-dimensional modulation pattern emitted from the spatial light modulator 209 is imaged. However, in a second embodiment of the present invention, a phase mask is placed between the semiconductor laser device 201 and the spatial light modulator 209 at a position where an image of the phase mask is formed on the spatial light modulator 209.

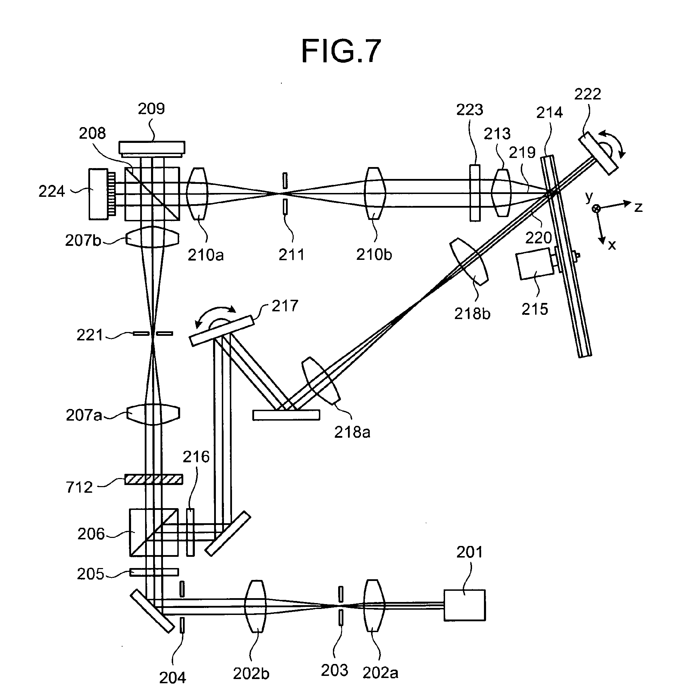

In the second embodiment, as shown in Fig. 7, a phase mask 712 is placed between the semiconductor laser device 201 and the spatial light modulator 209 at a position where boundaries in a plurality of regions of the phase mask 712 coincide with a plurality of boundaries in a data region of a two-dimensional modulation pattern emitted from the spatial light modulator 209. In other words, the phase mask 712 is placed at the position where an image of the phase mask 712 is formed on the spatial light modulator 209. The structure of the phase mask 712 and the structure of the other optical systems are the same as these of the first embodiment.

In this case, the image of the phase mask 712 is simply formed on the spatial light modulator 209, and thus, the phase mask 712, the relay lenses (collimator lenses) 207a and 207b, and the spatial light modulator 209 only have to be placed in the 4f optical system.

As explained above, in the second embodiment, the phase mask 712 is placed between the semiconductor laser device 201 and the spatial light modulator 209 at the position where the boundaries in the regions of the phase mask 712 coincide with the boundaries in the data region of the two-dimensional modulation pattern emitted from the spatial light modulator 209. Therefore, there is no need for high-accuracy alignment, and the 0th-order beam in the Fourier plane can be reduced in the hologram recording/reproducing system while preventing the degradation of the reproduced image.

The position of the phase mask 712 is not limited to the position according to the second embodiment if the phase mask 712 is placed in the above manner. For example, the phase mask can also be structured so as to be integrally formed with the spatial light modulator.

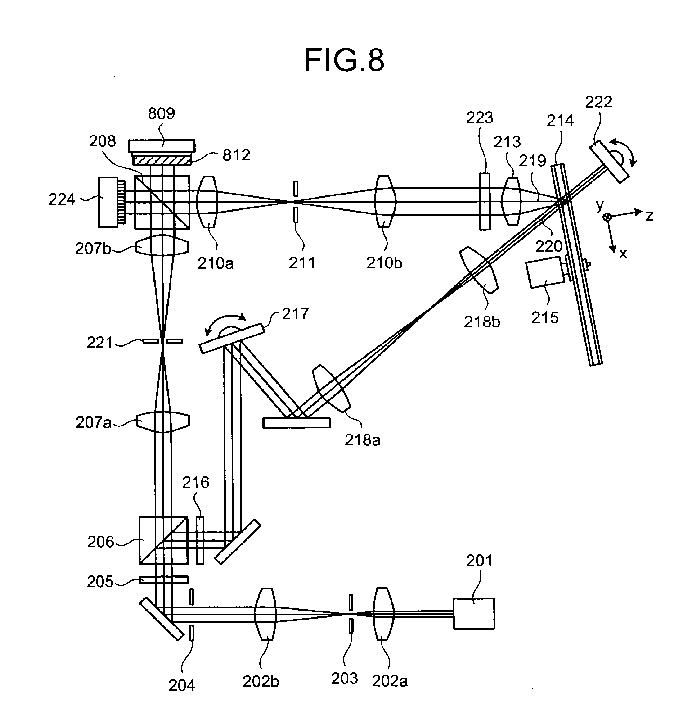

As shown in Fig. 8, in a modification of the second embodiment, a phase mask 812 is placed between the semiconductor laser device 201 and a spatial light modulator 809, and is integrally formed with the spatial light modulator 809 at a position where a plurality of boundaries in regions of the phase mask 812 coincide with a plurality of boundaries in the data region of a two-dimensional modulation pattern emitted from the spatial light modulator 809. The structure of the phase mask 812 and the structure of the other optical systems are the same as these of the first embodiment.

In this case, phases are simply imparted allowing for twice passage of the laser beam through the phase mask 812. Therefore, in the Equation (2), if the refractive index n of the material of the phase mask 812 is set to 1.5, the step height h is simply set to a half wavelength.

As explained above, the modification of the second embodiment has the same effect as that of the second embodiment, and the phase mask 812 is integrally formed with the spatial light modulator 809, and this feature allows easy fabrication of the phase mask 812 and the spatial light modulator 809.

In the holographic-memory recording/reproducing device according to the first or the second embodiment, the phases imparted to the information beam or to the laser beam by the phase mask are fixed, however, in a third embodiment of the present invention, phases imparted to the information beam by the phase mask are variable.

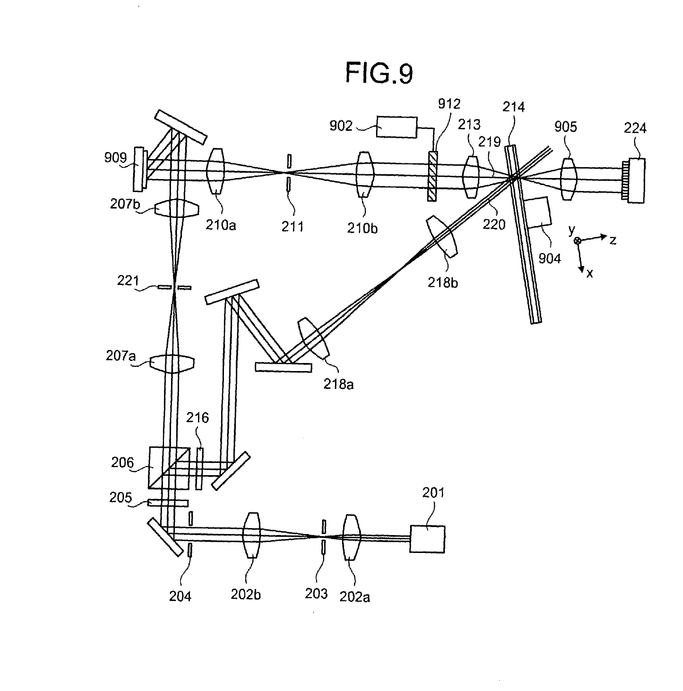

In the third embodiment, as shown in Fig. 9, a phase mask 912 is placed between a spatial light modulator 909 and the holographic-memory recording medium 214 at a position where a two-dimensional modulation pattern of the information beam 219 emitted from the spatial light modulator 909 is imaged by the relay lenses 210a and 210b.

Here, the phase mask 912 according to the third embodiment uses a liquid crystal panel, and a voltage is applied to the phase mask 912 by a phase-mask drive unit 902, to thereby cause a phase imparted to the information beam 219 to be electrically variable.

In the third embodiment, a digital micromirror device (DMD) is used as the spatial light modulator 909.

Moreover, the third embodiment is configured to place a Fourier transform lens 905 at a position where the reference beam 220 passes through the transmission holographic-memory recording medium 214, and to receive a reproduction beam having passed through the holographic-memory recording medium 214 by the imaging device 224.

Furthermore, the holographic-memory recording/reproducing device according to the third embodiment controls a system controller (not shown) and an actuator 904 so that the optical system such as the galvano mirror is not driven but the holographic-memory recording medium 214 is driven by the actuator 904, to perform biaxial angular multiplexing recording. The biaxial angular multiplexing recording includes angular multiplexing recording performed with rotation around the z-axis in Fig. 9 (around a rotating axis of the holographic-memory recording medium 214) and angular multiplexing recording performed with rotation around the y-axis therein (around the axis in a direction perpendicular to the rotating axis of the holographic-memory recording medium 214 and parallel to the plane of the holographic-memory recording medium 214).

The angular multiplexing recording system with biaxial rotation uses a technology disclosed in U.S. Patent No. 5483365. In this U.S. Patent, the angular multiplexing recording system is called "peristrophic multiplexing". This system has no drive unit for an optical system except for a drive system for the holographic-memory recording medium, and thus, the structure of this system is simple. Beside, the third embodiment is particularly useful for a multiple recording system using the peristrophic multiplexing.

The structure of the other optical systems is the same as that of the first embodiment. The two-dimensional modulation pattern modulated by the spatial light modulator 909 is the same as that of the first embodiment.

The phase mask 912 according to the third embodiment has 16 regions similarly to the first embodiment.

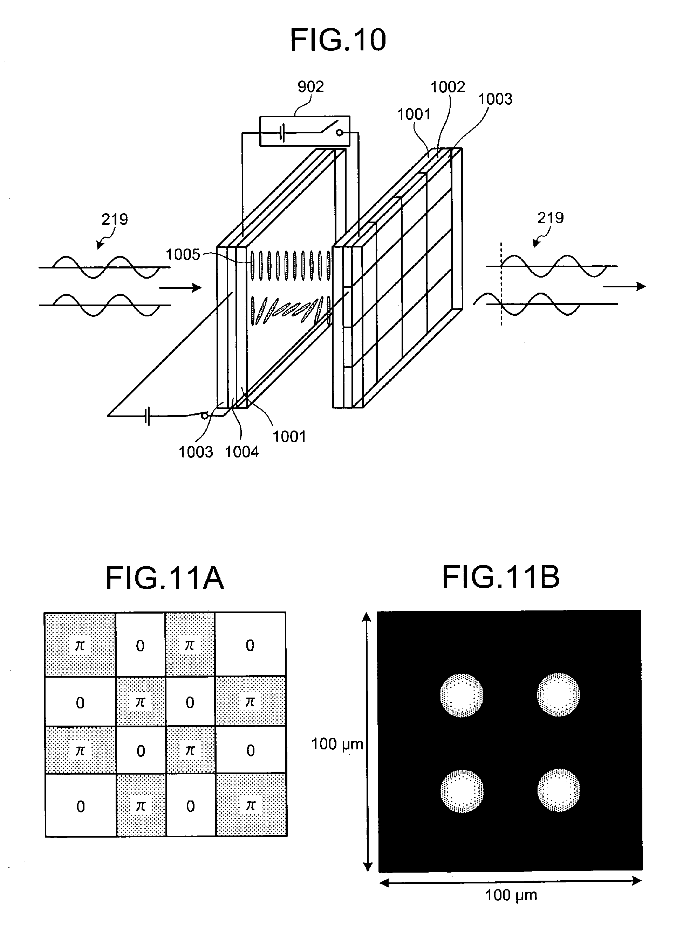

Fig. 10 is a schematic diagram illustrating a structure of the phase mask 912. The phase mask 912 (liquid crystal panel) is structured to hold liquid crystal molecules 1005 by oriented films 1001, and further provide a transparent electrode 1004 and a divided transparent electrode 1002, which are formed of indium tin oxide (ITO) or the like, outside the oriented films 1001. The divided transparent electrode 1002 can separately apply a voltage to each of the regions of the phase mask 912. Fig. 10 represents only interconnecting states of two regions for convenience of explanation, and interconnecting states of the other regions are not shown therein.

Formed outside the divided transparent electrode 1002 is a glass substrate 1003 as a protective layer. Used for the liquid crystal molecules 1005 is an anisotropic material (typically, nematic liquid crystal) which has different refractive indices between an optical axis direction and a direction perpendicular thereto.

When the phase-mask drive unit 902 having a power supply and a switching element applies a voltage to the transparent electrode 1004 and the divided transparent electrode 1002, the direction of the liquid crystal molecules 1005 can be changed as shown in Fig. 10. This change causes the refractive index to the information beam passing through the phase mask 912 to be changed, and, as a result, the phase imparted to the information beam can be controlled.

The phase mask 912 itself is used for compensation of coma aberration with disk tilt of an existing current optical disk or for compensation of spherical aberration with a difference in a disk thickness. Thus, the phase mask 912 can be fabricated at low cost.

The tolerance of in-plane positional displacement, the tolerance of positional displacement in the optical axis direction, and the tolerance of rotational displacement are the same as these of the first embodiment, and these are satisfactorily within acceptable ranges in practical use, respectively.

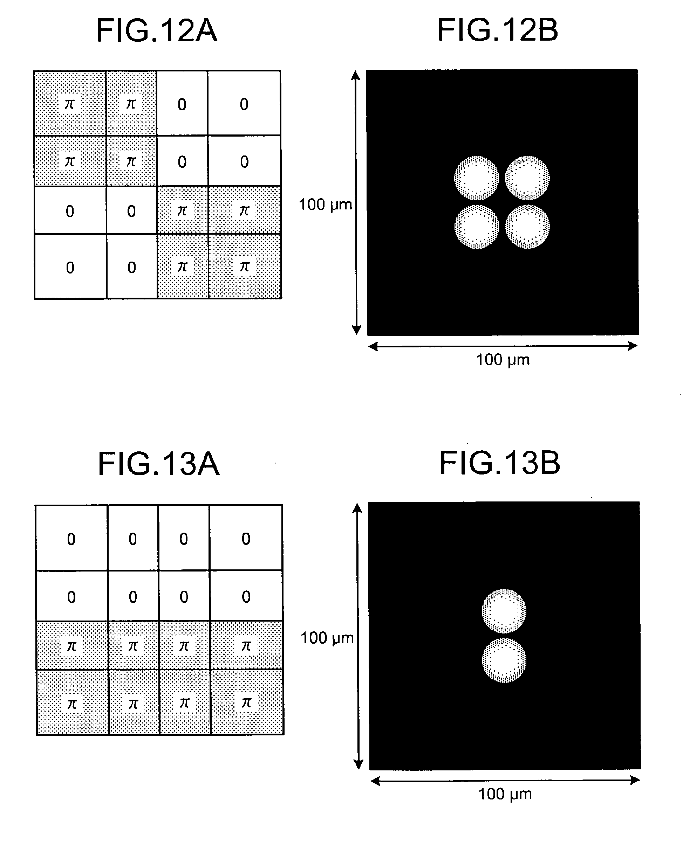

In the third embodiment, the phase-mask drive unit 902 applies the voltage to the phase mask 912 in this manner, to thereby enable phases imparted to the information beam to be changed. Change patterns of the phases are shown in Figs. 11A, 12A, 13A, 14A, 15A, and 16A, and intensity distributions in a region of 100 micrometers $\times$ 100 micrometers near the center of the optical axis in the Fourier plane in respective cases are shown in Figs. 11B, 12B, 13B, 14B, 15B, and 16B. Figs. 11B, 12B, 13B, 14B, 15B, and 16B are results of analyzing the patterns based on the laser wavelength: 0.405 micrometer, a width of an input image on an aperture of Fourier transform lens: 3 millimeters, and a focal length of Fourier transform lens: 80 millimeters. Here, the intensity distribution in the Fourier plane is shown in Fig. nB when the phase of the phase mask 912 is a pattern of Fig. nA.

As shown in Figs. 11A, 12A, 13A, 14A, 15A, and 16A, in the phase mask 912, imparted phases are two values 0 and $\pi$ and are variable in six phase patterns. However, phases with three values or more may be used. It is noted that the phase patterns and the number thereof are not limited to these values.

In the third embodiment, similarly to the first embodiment, by imparting different phases to the information beam in the regions of the phase mask 912, the high-brightness 0th-order beam spot is dispersed into a plurality of spots, to enable reduction of the intensity. In addition to this, by changing the phase pattern to any one of the different phase patterns in Figs. 11A, 12A, 13A, 14A, 15A, and 16A, the positions and the number of spots to be dispersed can be changed.

More specifically, in the third embodiment, the phase-mask drive unit 902 is driven by an instruction issued from the system controller (not shown) to change the phase pattern of the phase mask 912, and the phase to be imparted to the information beam is thereby changed, so that multiple recording is performed in the holographic-memory recording medium 214 while changing the positions and the number of the spots. This enables excessive overlap of high-brightness spots to be avoided, reduction of the high-brightness spots, and prevention of burn-in of the information recording medium.

In the case of the phase patterns, for example, in Figs. 11A, 12A, 13A, 14A, and 15A, there is no spatial overlap of the spots as shown in Figs. 11B, 12B, 13B, 14B, and 15B. Therefore, when information is to be recorded in the holographic-memory recording medium 214 by multiple recording, the phase patterns in Figs. 11A, 12A, 13A, 14A, and 15A are used to change the phases in an arbitrary order and each phase is imparted to the information beam, so that excessive overlap of the high-brightness spots can be avoided.

The dispersed spots in the Fourier plane are particularly useful for the angular multiplexing recording system (peristrophic multiplexing) using two axes used in the holographic-memory recording/reproducing device according to the third embodiment.

Angular selectivity (Bragg selectivity) in the angular multiplexing recording performed with rotation around the z-axis is described in Equation (5) in technical literature [Kevin Curtis, Allen Pu, and Demetri Pealtis, "Method for holographic storage using peristrophic multiplexing", OPTICS LETTERS, Vol. 19, No. 13, pp. 993 to 994 (1994)]. The Bragg selectivity mentioned here indicates a rotation angle at which the amount of a reproduction beam changes from the peak value to zero (first null) upon reproduction.

According to Equation (5) in the technical literature, the Bragg selectivity $d\theta$ is represented by following Equation (6), where $\lambda$ is a wavelength of the laser beam, $\theta_r$ is an incident angle of the reference beam in the hologram recording material, $\theta_s$ is an incident angle of the information beam, and t is a thickness of the hologram recording material of the hologram recording layer.

$$d\theta = \left[ \frac{2\lambda}{t} \cdot \frac{\cos\theta_s}{\sin\theta_r(\sin\theta_s + \sin\theta_r)} \right]^{1/2} \qquad (6)$$

An appropriate value of the Bragg selectivity $d\theta$ for the holographic-memory recording/reproducing device is about 8.2 degrees when calculated based on a wavelength $\lambda$ of the laser beam: 0.405 micrometer, both an incident angle $\theta_r$ of the reference beam and an incident angle $\theta_s$ of the information beam: 25 degrees, and a thickness of the recording material: 100 micrometers. An angle step of the angular multiplexing recording is desirably set to the Bragg selectivity or more in terms of reducing crosstalk noise.

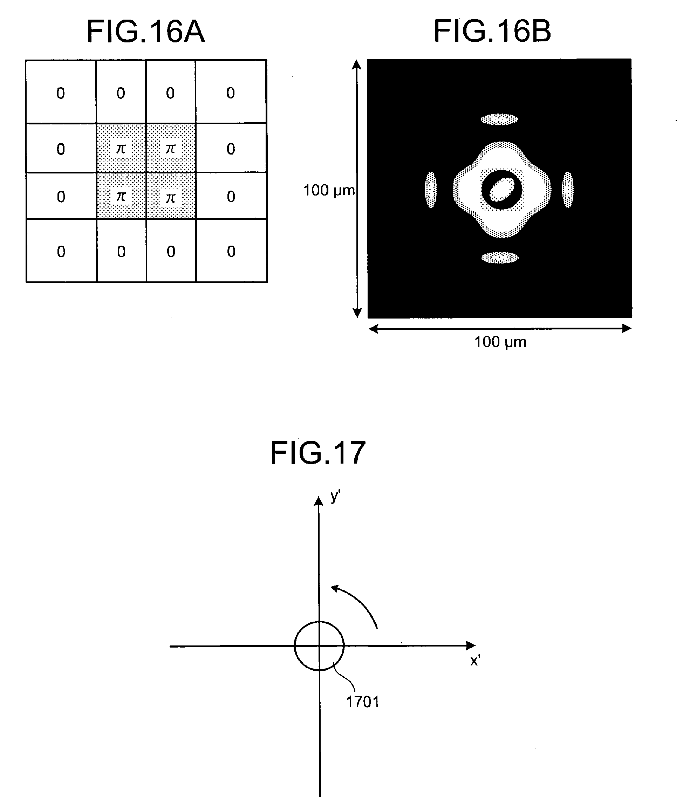

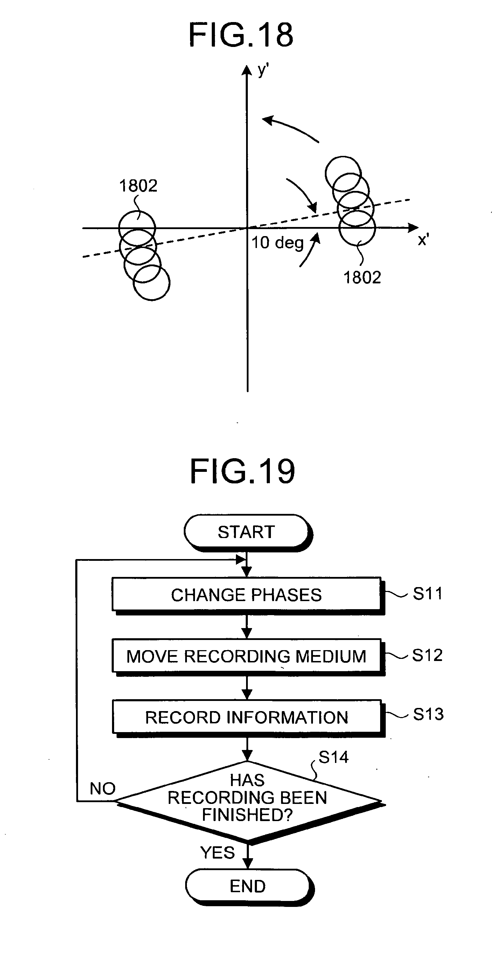

Fig. 17 is a schematic diagram illustrating an example of a beam spot in the Fourier plane when an angle step is set to 10 degrees in the case of the conventional technology in which the phase mask is not used. Fig. 18 is a schematic diagram illustrating an example of beam spots in the Fourier plane when the angle step is set to 10 degrees using a phase mask according to a fourth embodiment of the present invention.

Figs. 17 and 18 are shown in a x'y'z' coordinate system fixed to the holographic-memory recording medium, and the surface thereof is shown as a x'y' plane.

As shown in Fig. 17, when the phase mask is not used, the position of the high-brightness 0th-order beam spot with respect to rotation around the z-axis does not change. Therefore, the high-brightness 0th-order beam spots are superimposed on one another in each angular multiplexing recording, and the holographic-memory recording medium is thereby excessively exposed and consumed.

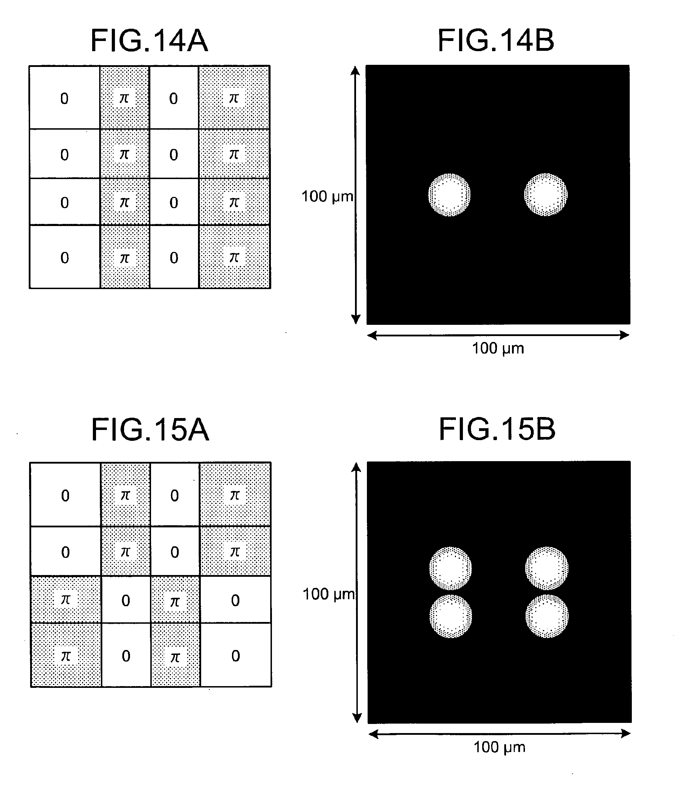

On the other hand, the phase mask is used in the fourth embodiment, and therefore, as shown in Fig. 18, by performing angular multiplexing recording with four steps each of which has an angle step of 10 degrees, the 0th-order beam spot is dispersed into two spots. This dispersion corresponds to the phase pattern shown in Fig. 14A and the intensity distribution shown in Fig. 14B. As is clear from Fig. 18, the positions of the dispersed two spots with respect to the rotation around the z-axis are changed, and thus, the excessive overlap of the beam spots can be avoided, which enables the overlap of the 0th-order beams in the Fourier plane to be extremely effectively prevented.

Furthermore, in the holographic-memory recording medium according to the fourth embodiment, information is recorded in the holographic-memory recording medium 214 by angular multiplexing recording while changing the phase patterns of the phase mask 912.

Fig. 19 is a flowchart of a control process for angular multiplexing recording. First, when angular multiplexing recording is to be performed, a system controller issues an instruction to the phase-mask drive unit 902 to change the phase pattern of the phase mask 912, and the phase-mask drive unit 902 receives the instruction and applies a voltage to the phase mask 912, and changes the phase pattern to any one of the phase patterns in Figs. 11A, 12A, 14A, and 15A to change the phases (Step S11).

Then, the system controller issues a drive instruction to the actuator 904 to rotationally move the holographic-memory recording medium 214 by the angle step (Step S12). Next, the laser beam is emitted from the semiconductor laser device 201, and information is recorded in the holographic-memory recording medium 214 due to interference between the information beam and the reference beam (Step S13). The processes from Steps S11 to S13 are repeated until the information recording is finished (Step S14). With these processes, the angular multiplexing recording is performed while changing the phase patterns of the phase mask 912, and thus, the 0th-order beam spot in the Fourier plane can be further dispersed and the intensity of the high-brightness spot can thereby be reduced.

As explained above, in the holographic-memory recording/reproducing device according to the fourth embodiment, in addition to the effect of the first embodiment, the high-brightness 0th-order beam spot in the Fourier plane can be effectively dispersed into a plurality of spots because the phases to be imparted to the information beam by the phase mask 912 are made variable, so that the intensity of the high-brightness spot is reduced and the degradation of a reproduced image can thereby be prevented.

In the holographic-memory recording/reproducing device according to the fourth embodiment, the high-brightness 0th-order beam spot in the Fourier plane can be more effectively dispersed into a plurality of spots for the biaxial angular multiplexing recording system (peristrophic multiplexing), and the degradation of a reproduced image can be effectively prevented.

In the first to the fourth embodiments, the examples of applying the present invention to the holographic-memory recording/reproducing devices are explained, however, the present invention is also applicable to any holographic-memory recording device that only records information in the holographic-memory recording medium.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1.  An optical information recording apparatus comprising:

    a light source (201) that emits an irradiation beam;
    a spatial light modulator (209) that converts the irradiation beam to an information beam, the information beam having a two-dimensional modulation pattern that carries information and is formed with a plurality of first regions in which each of boundaries is formed with OFF pixels;
    a phase modulator (212) that includes a plurality of second regions, and that imparts the phases to the irradiation beam or the information beam to modulate phases of the irradiation beam or the information beam; and
    a light collector (213) that collects the information beam and a reference beam on an optical information recording medium (214) that can record the information as hologram, by using interference fringes produced due to interference between the information beam and the reference beam, wherein
    the boundaries in the first regions of the two-dimensional modulation pattern coincide with boundaries in the second regions.

2.  The apparatus according to claim 1, wherein each of the second regions is formed with a step having a thickness according to each of the phases.

3.  The apparatus according to claim 1, wherein the second regions impart phases of different two value patterns to the information beam that passes therethrough.

4.  The apparatus according to claim 1, wherein the second regions impart phases of different three or more value patterns to the information beam that passes therethrough.

5.  The apparatus according to claim 1, further comprising an applying unit (902) that applies voltages to the second regions so as to change respective phases of the second regions, wherein
    the second regions are formed with a liquid crystal element in which phases are electrically variable.

6.  The apparatus according to claim 5, further comprising:

    a drive unit (904) that drives the optical information recording medium (214); and
    a control unit that controls the drive unit (904) so as to record information in the optical information recording medium by multiple recording while controlling the applying unit (902) so as to change the respective phases of the second regions.

7.  The apparatus according to claim 5, wherein
    the drive unit (904) moves the optical information recording medium (214) in a first rotational direction in which rotation is around a rotating axis of the optical information recording medium (214) and in a second rotational direction in which rotation is around an axis in a direction perpendicular to the rotating axis and parallel to a plane of the optical information recording medium, and

the control unit controls the drive unit (904) so as to record information in the optical information recording medium (214) by angular multiplexing recording while rotationally moving the optical information recording medium (214) in the first rotational direction and the second rotational direction.

8. The apparatus according to claim 1, wherein the phase modulator (212) is placed between the spatial light modulator (209) and the optical information recording medium (214) at a position where the two-dimensional modulation pattern is imaged and where the boundaries in the first regions are imaged on the boundaries in the second regions, and the phase modulator (212) modulates the phases of the information beam emitted from the spatial light modulator (209).

9. The apparatus according to claim 1, wherein the phase modulator (712) is placed between the light source (201) and the spatial light modulator (209) at a position where the boundaries in the second regions coincide with the boundaries in the first regions of the two-dimensional modulation pattern emitted from the spatial light modulator, and the phase modulator (712) modulates the phases of the irradiation beam emitted from the light source (201).

10. The apparatus according to claim 9, wherein the phase modulator (812) is integrally formed with the spatial light modulator (809).

11. An optical information recording method comprising:

converting an irradiation beam emitted from a light source (201), by a spatial light modulator (209), to an information beam, the information beam having a two-dimensional modulation pattern that carries information and is formed with a plurality of first regions in which each of boundaries is formed with OFF pixels;

modulating phases of the irradiation beam or the information beam by imparting phases to the irradiation beam or to the information beam by a phase modulator (212) that including a plurality of second regions; and

collecting the information beam and a reference beam on an optical information recording medium (214) that can record the information as hologram, by using interference fringes produced due to interference between the information beam and the reference beam, wherein

the boundaries in the first regions of the two-dimensional modulation pattern coincide with boundaries in the second regions.

# FIG.1

# FIG.2A

| | | | |
|---|---|---|---|
| π | 0 | π | 0 |
| 0 | π | 0 | π |
| π | 0 | π | 0 |
| 0 | π | 0 | π |

# FIG.2B

# FIG.3

# FIG.4

# FIG.5

# FIG.6A

# FIG.6B

# FIG.7

# FIG.8

# FIG.9

# FIG.10

# FIG.11A

# FIG.11B

## FIG.12A

| | | | |
|---|---|---|---|
| π | π | 0 | 0 |
| π | π | 0 | 0 |
| 0 | 0 | π | π |
| 0 | 0 | π | π |

## FIG.12B

100 μm

100 μm

## FIG.13A

| | | | |
|---|---|---|---|
| 0 | 0 | 0 | 0 |
| 0 | 0 | 0 | 0 |
| π | π | π | π |
| π | π | π | π |

## FIG.13B

100 μm

100 μm

## FIG.14A

| | | | |
|---|---|---|---|
| 0 | π | 0 | π |
| 0 | π | 0 | π |
| 0 | π | 0 | π |
| 0 | π | 0 | π |

## FIG.14B

100 μm

100 μm

## FIG.15A

| | | | |
|---|---|---|---|
| 0 | π | 0 | π |
| 0 | π | 0 | π |
| π | 0 | π | 0 |
| π | 0 | π | 0 |

## FIG.15B

100 μm

100 μm

## FIG.16A

| | | | |
|---|---|---|---|
| 0 | 0 | 0 | 0 |
| 0 | π | π | 0 |
| 0 | π | π | 0 |
| 0 | 0 | 0 | 0 |

## FIG.16B

100 μm

100 μm

## FIG.17

1701

# FIG.18

# FIG.19

Europäisches
Patentamt

European
Patent Office

Office européen
des brevets

**EUROPEAN SEARCH REPORT**

Application Number

EP 08 02 1809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 734 516 A (PIONEER CORP [JP]) 20 December 2006 (2006-12-20) * paragraphs [0014], [0017], [0022] - paragraph [0026]; figures 3,5 * | 1-11 | INV. G11B7/0065 G11B7/125 G03H1/00 |
| A | TAKEDA Y ET AL: "RANDOM PHASE SHIFTERS FOR FOURIER TRANSFORMED HOLOGRAMS" APPLIED OPTICS, OSA, OPTICAL SOCIETY OF AMERICA, WASHINGTON, DC, vol. 11, no. 4, 1 April 1972 (1972-04-01), pages 818-822, XP002447806 ISSN: 0003-6935 * the whole document * | 1-11 | ADD. G11B7/007 |
| A | EP 1 708 182 A (FUJITSU LTD [JP]) 4 October 2006 (2006-10-04) * paragraph [0017] - paragraph [0019]; figure 2 * | 1-11 | |
| A | WO 2005/057559 A (KONINKL PHILIPS ELECTRONICS NV [NL]; COENE WILLEM [NL]; STALLINGA SJOE) 23 June 2005 (2005-06-23) * page 5, line 23 - page 6, line 29; figure 3 * | 1-11 | TECHNICAL FIELDS SEARCHED (IPC) G11B |

The present search report has been drawn up for all claims

| Place of search | Date of completion of the search | Examiner |
|---|---|---|
| The Hague | 25 February 2009 | Zimmer, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 02 1809

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2009

| Patent document cited in search report | | Publication date | Patent family member(s) | | Publication date |
|---|---|---|---|---|---|
| EP 1734516 | A | 20-12-2006 | CN | 1938764 A | 28-03-2007 |
| | | | WO | 2005098830 A1 | 20-10-2005 |
| | | | US | 2008231925 A1 | 25-09-2008 |
| EP 1708182 | A | 04-10-2006 | CN | 1841525 A | 04-10-2006 |
| | | | JP | 2006276666 A | 12-10-2006 |
| | | | KR | 20060106663 A | 12-10-2006 |
| | | | US | 2006221419 A1 | 05-10-2006 |
| WO 2005057559 | A | 23-06-2005 | JP | 2007513458 T | 24-05-2007 |
| | | | KR | 20060132842 A | 22-12-2006 |
| | | | US | 2007121184 A1 | 31-05-2007 |

EPO FORM P0459

For more details about this annex : see Official Journal of the European Patent Office, No. 12/82

# EP 2 073 198 A1

## REFERENCES CITED IN THE DESCRIPTION

### Patent documents cited in the description

- JP 2007324941 A
- JP 2004198816 A
- JP 2007172682 A
- JP 2005352097 A
- US 5483365 A

### Non-patent literature cited in the description

- **MICHAEL J. O'CALLAGHAN ; JOHN R. MCNEIL ; CHRIS WALKER ; MARK HANDSCHY.** Spatial light modulators with integrated phase masks for holographic data storage. *Tech. Digest of ODS 2006,* 2006, 23-25
- **KEVIN CURTIS ; ALLEN PU ; DEMETRI PEALTIS.** Method for holographic storage using peristrophic multiplexing. *OPTICS LETTERS,* 1994, vol. 19 (13), 993-994